(19) Europäisches Patentamt
European Patent Office
Office européen des brevets

(11) Veröffentlichungsnummer : **0 036 553**
**B2**

(12) **NEUE EUROPÄISCHE PATENTSCHRIFT**

(45) Veröffentlichungstag der neuen Patentschrift : **28.08.85**

(51) Int. Cl.⁴ : **C 09 B 37/00**, C 09 B 67/34// C09B29/085, D06P3/00, D21H1/46

(21) Anmeldenummer : **81101743.3**

(22) Anmeldetag : **10.03.81**

(54) **Verfahren zur Herstellung von Flüssigeinstellungen basischer Azofarbstoffe.**

(30) Priorität : **22.03.80 DE 3011235**

(43) Veröffentlichungstag der Anmeldung : **30.09.81 Patentblatt 81/39**

(45) Bekanntmachung des Hinweises auf die Patenterteilung : **06.04.83 Patentblatt 83/14**

(45) Bekanntmachung des Hinweises auf die Entscheidung über den Einspruch : **28.08.85 Patentblatt 85/35**

(84) Benannte Vertragsstaaten :
**CH DE FR GB IT LI**

(56) Entgegenhaltungen :
**DE-B- 2 312 087**
**FR-A- 2 335 493**
**FR-A- 2 406 656**
**Veröffentlichung von B.I. Belov und V.V. Vozlov, Zhurnal Obschei Khimii, Vol. 32 (1962) Nr. 10, S. 3362-3368**

(73) Patentinhaber : **BASF Aktiengesellschaft**
**Carl-Bosch-Strasse 38**
**D-6700 Ludwigshafen (DE)**

(72) Erfinder : **Schmeidl, Karl, Dr.**
**Carostrasse 25**
**D-6710 Frankenthal (DE)**

**EP 0 036 553 B2**

**Beschreibung**

Die Erfindung betrifft ein Verfahren zur Herstellung von bis zu 40 %igen Flüssigeinstellungen basischer Azofarbstoffe aus m-Phenylendiaminen, die noch durch Alkyl oder Alkoxy substituiert sein können, durch Diazotierung und Kupplung, das dadurch gekennzeichnet ist, daß man die m-Phenylendiamine in $C_1$- bis $C_4$-alkancarbonsaurer Lösung mit ungefähr 0,55 bis 0,73 Mol Nitrit berechnet als salpetrige Säure behandelt und anschließend auf ungefähr 50 °C erwärmt, die $C_1$- bis $C_4$-Alkancarbonsäuren können dabei noch substituiert sein.

Die $C_1$- bis $C_4$-Alkansäuren können z. B. noch durch Fluor, Chlor, Hydroxy oder Methoxy substituiert sein. Im einzelnen seien z. B. Fluoressigsäure, Chloressigsäure, Dichloressigsäure, Hydroxyessigsäure, Methoxyessigsäure und vorzugsweise Ameisen-, Essig- oder Propionsäure genannt.

Das Lösungsmedium kann weiterhin Wasser oder andere Lösungsmittel, wie Alkanole, Glykole, Glykolether oder Amide, z. B. Methanol, Ethanol, Propanole, Ethylenglykol, Diethylenglykol, Propylenglykol, Dipropylenglykol, Ethylenglykolmonomethyl-, -ethyl-, -propyl- oder -butylether, Dimethylformamid, N-Methylpyrrolidon oder auch Butyrolacton enthalten.

In der Regel enthält das für die Diazotierung und Kupplung verwendete Lösungsmedium ungefähr 20-70 % Carbonsäure, vorzugsweise 40 bis 60 %, und als Rest 30-80 % Wasser.

Zum Diazotieren eignen sich z. B. Alkalinitrite, insbesondere jedoch Alkylnitrite, die nach der Reaktion in Lösungsmittel übergehen. Solche Alkylnitrite sind beispielsweise in der DE-A 21 44 420 åbeschrieben, im einzelnen sei beispielsweise Propylenglykoldinitrit, Dipropylenglykoldinitrit oder Neopentylglykoldinitrit genannt. Als Alkalinitrit kommt insbesondere Natriumnitrit in Betracht.

Das erfindungsgemäße Verfahren wird zweckmäßigerweise so durchgeführt, daß man das m-Phenylendiamin oder m-Phenylendiamingemisch in carbonsaurer Lösung vorlegt und dann das Diazotierungsmittel zugibt. Reaktionstemperaturen von ungefähr − 10 bis + 20 °C, vorzugsweise 15 °C, sind geeignet. Nach dem Nachrühren für 1/2 bis ungefähr 4 Stunden und der Erwärmung auf ungefähr 50 °C erhält man direkt eine Farbstofflösung, die dann durch Zugabe von Wasser, Carbonsäure oder weiteren Lösungsmitteln, insbesondere zur Kältestabilisierung, auf Typstärke eingestellt werden kann. Zweckmäßigerweise wird nach dem Nachrühren noch eine Filtration eingeschaltet, Einzelheiten der Reaktionsführung können den Beispielen entnommen werden.

Die Mengenverhältnisse werden zweckmäßigerweise so gewählt, daß die verfahrensgemäß hergestellten Lösungen ungefähr 15 bis 40 % Farbstoff enthalten.

Die verfahrensgemäß hergestellten Lösungen enthalten als Farbstoffe im wesentlichen Verbindungen der allgemeinen Formel

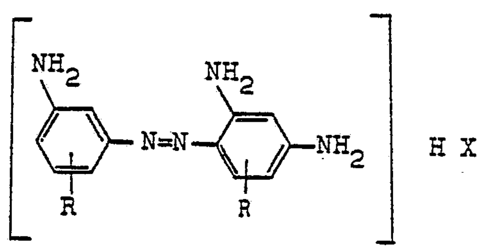

wobei R Wasserstoff, Alkyl, insbesondere Methyl oder auch Methoxy und X ein als Anion abspaltbarer Rest sind, ferner liegen Verbindungen vor, die durch weitere Diazotierung von Aminogruppen und Kupplung entstehen.

Als m-Phenylendiamine werden insbesondere folgende Verbindungen verwendet :

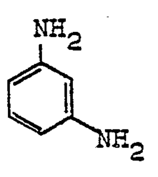 ,

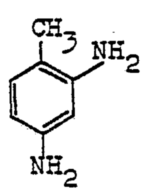

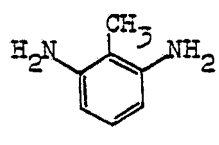

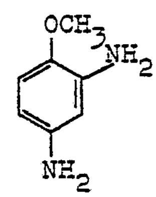

oder

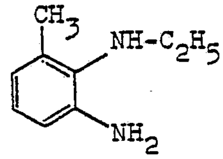

Die Reaktionsprodukte sind z. B. unter den Handelsnamen Bismarckbraun G und R oder Vesuvin bekannt und dienen zur Färbung von Papier, besonders Altpapier oder Leder oder auch zum Färben anionisch modifizierter Fasern, z. B. Acrylnitrilpolymerisaten. Durch Abmischen mit anderen basischen Farbstoffen können natürlich auch andere Farbtöne, wie Schwarz, eingestellt werden.

Gegenüber den bekannten Verfahren zur Herstellung von Flüssigeinstellungen dieser basischen Farbstoffe bietet das erfindungsgemäße Verfahren große Vorteile, weil man direkt, d. h. ohne die zumeist schwierige Zwischenisolierung der Farbstoffbase, die in ein gut lösliches Salz überführt werden muß, eine allen Ansprüchen der Praxis genügende Flüssigeinstellung erhält. Es treten somit auch keine Abwasserprobleme auf.

Überraschend war bei dem erfindungsgemäßen Verfahren vor allem, daß die Diazotierung in Gegenwart von Carbonsäuren, d. h. ohne Mineralsäuren, gelingt und daß man Lösungen trotz langsamer Zugabe des Diazotierungsmittels erhält, die ohne Ausfällung von Farbstoff mit Wasser mischbar sind. Durch Variation der Reaktionsbedingungen, der Art und Menge an Carbonsäure sowie der Nitritmenge gelingt es zudem, Farbstoffe herzustellen, die Papier in unterschiedlichen Nuancen färben.

Trotz der erfindungsgemäßen «Eintopffahrweise», d. h. ohne die Möglichkeit Neben- oder Zersetzungsprodukte absutrennen, gelingt es Farbstoffe herzustellen, die den bisherigen Handelsmarken an Brillanz gleichkommen oder sie sogar übertreffen.

Weiterhin tritt bei den Flüssigeinstellungen keine Stickstoffabspaltung mehr auf, die zuweilen bei den bereits existierenden Flüssigmarken zu Schwieigkeiten geführt hat. Im Hinblick darauf ist die Nitritmenge kritisch, die möglichst unter 0,73 bleiben sollte.

In den folgenden Beispielen beziehen sich die Angaben über Teile und Prozente, sofern nicht anders vermerkt, auf das Gewicht.

## Beispiel 1

In eine Mischung aus 360 Teilen Essigsäure, 80 Teilen Wasser und 60 Teilen Glykol werden 105 Teile m-Phenylendiamin eingetragen und unter Rühren und Erwärmen aufgelöst. Dann kühlt man auf 8 bis 10 °C ab und trägt portionsweise in etwa eineinhalb Stunden 47 Teile Natriumnitrit ein. Die Temperatur hält man durch Kühlen im Bereich um 8 bis 13 °C.

Nach beendeter Zugabe rührt man eine halbe Stunde nach, gibt 10 Teile m-Phenylendiamin hinzu und rührt noch weitere 3 Stunden bei 8 bis 13 °C. Hernach erwärmt man etwa 1 Stunde lang auf 35 bis 40 °C und kühlt dann ab.

Die so erhaltene Farbstofflösung färbt Papier rotstichig braun.

## Beispiel 2

105 Teile m-Phenylendiamin werden in einer Mischung aus 360 Teilen Essigsäure, 50 Teilen Wasser und 60 Teilen Glykol gelöst. Zur vorgelegten Lösung läßt man bei etwa 10 °C in eineinhalb Stunden 53 Teile Neopentylglykoldinitrit hinzufließen. Man kühlt und läßt die Temperatur nicht über 13 °C ansteigen. Nun läßt man eine Stunde nachrühren und gibt dann 4 Teile m-Phenylendiamin hinzu. Nach weiterem zweistündigem Nachrühren bei 8 bis 13 °C wird eine Stunde lang auf 35 bis 40 °C erwärmt und anschließend abgekühlt. Durch Zugabe von 55 Teilen Wasser wird die Farbstofflösung auf die Farbstärke der im Beispiel 1 erhaltenen Lösung abgeschwächt.

Die Papierfärbung ist im Vergleich zur Lösung aus Beispiel 1 gelbstichiger braun.

## Beispiel 3

115 Teile 1,3-Diaminobenzol werden in einer Mischung aus 140 Teilen Wasser und 72,2 Teilen einer 84,1-prozentigen Ameisensäure gelöst und auf 5 °C abgekühlt. Man läßt dann unter Rühren und Kühlen in etwa eineinhalb Stunden 53 Teile Neopentylglykoldinitrit hinzufließen, ohne daß die Temperatur über 15 °C ansteigt. Nach beendeter Zugabe läßt man 3 Stunden bei etwa 10 bis 15 °C nachrühren, gibt dann 140 Teile Essigsäure und 70 Teile Wasser hinzu und erwärmt anschließend eine Stunde lang auf 35 bis 40 °C. Man gibt dann 60 Teile Glykol und 42 Teile Wasser hinzu und kühlt ab.

Die so erhaltene Farbstofflösung färbt im Vergleich zur Lösung aus Beispiel 2 Papier deutlich gelber bei gleicher Farbstärke.

## Beispiel 4

2 028 Teile 1-Methyl-2,4-diaminobenzol und 1 092 Teile 1-Methyl-2,6-diaminobenzol werden in einer Mischung aus 4 520 Teilen Eisessig und 1 480 Teilen Wasser gelöst. Man kühlt auf etwa 10 °C ab und läßt in ungefähr 4 Stunden unter Kühlen 1 460 Teile Neopentylglykoldinitrit hinzufließen. Während der Zugabe hält man die Temperatur im Bereich um 0 bis 15 °C. Anschließend rührt man 3 Stunden nach und erwärmt dann 2 Stunden lang auf 50 bis 55 °C. Hernach verdünnt man mit 1 300 Teilen Glykol und 1 600 Teilen Wasser.

Verwendet man anstelle von 4 520 Teilen Eisessig und 1 480 Teilen Wasser zum Lösen 6 920 Teile

Eisessig und 1 150 Teile Wasser und verdünnt nach dem Erwärmen lediglich mit 605 Teilen Wasser so erhält man eine lagerstabile Lösung mit ähnlichen färberischen Eigenschaften.

**Patentansprüche**

1. Verfahren zur Herstellung von bis zu 40 %igen Flüssigeinstellungen basischer Azofarbstoffe aus m-Phenylendiaminen, die noch durch Alkyl oder Alkoxy substituiert sein können durch Diazotierung und Kupplung, dadurch gekennzeichnet, daß man die m-Phenylendiamine in $C_1$- bis $C_4$-alkancarbonsaurer Lösung mit ungefähr 0,55 bis 0,73 Mol Nitrit berechnet als salpetrige Säure behandelt und anschließend auf ungefähr 50 °C erwärmt, die $C_1$- bis $C_4$-Alkancarbonsäuren können dabei noch substiuiert sein.

2. Verfahren gemäß Anspruch 1, dadurch gekennzeichnet, daß man als Carbonsäure Ameisensäure oder Essigsäure verwendet.

3. Verfahren gemäß Ansprüche 1 und 2, dadurch gekennzeichnet, daß man pro Mol m-Phenylendiamin mindestens 0,9 Mol Carbonsäure verwendet.

4. Verfahren gemäß Anspruch 1, dadurch gekennzeichnet, daß man zur Diazotierung Natriumnitrit oder ein Alkylnitrit verwendet.

5. Verfahren gemäß Ansprüche 1 und 4, dadurch gekennzeichnet, daß man als Alkylnitrit Neopentylglykoldinitrit verwendet.

6. Verwendung der erfindungsgemäß hergestellten Farbstoffe zum Färben von Papier, Leder oder anionisch modifizierten Fasern.

**Claims**

1. A process for the preparation of up to 40 % strength liquid formulations of basic azo dyes from m-phenylenediamines, which may be alkyl- or alkoxy-substituted, by diazotizing and coupling, wherein the m-phenylenediamines are treated with about 0.55 to 0.73 mole of nitrite, calculated as nitrous acid, in a solution containing a $C_1$-$C_4$-alkanoic acid which may or may not be substituted, and are then heated to about 50 °C.

2. A process as claimed in claim 1, wherein the carboxylic acid used is formic acid or acetic acid.

3. A process as claimed in claims 1 and 2, wherein not less than 0.9 mole of carboxylic acid is used per mole of m-phenylenediamine.

4. A process as claimed in claim 1, wherein sodium nitrite or an alkyl nitrite is used for the diazotization.

5. A process as claimed in claims 1 and 4, wherein neopentyl glycol dinitrite is used as the alkyl nitrite.

6. The use of the dyes prepared according to the invention for dyeing paper, leather or anionically modified fibres.

**Revendications**

1. Procédé pour la préparation de compositions liquides à 40 % au maximum de colorants azoïques basiques à partir de m-phénylène-diamines qui peuvent être encore substituées par des groupes alkyle ou alcoxy, par diazotation et copulation, caractérisé en ce qu'on traite les m-phénylène-diamines en solution dans des acides alcane ($C_1$-$C_4$)-carboxyliques par 0,55 à 0,73 mol environ de nitrite, calculées à l'état d'acide nitreux, puis on chauffe à 50 °C environ, les acides alcane ($C_1$-$C_4$)-carboxyliques pouvant être encore substitués.

2. Procédé selon la revendication 1, caractérisé en ce qu'on utilise, en tant qu'acide carboxylique, l'acide formique ou l'acide acétique.

3. Procédé selon la revendication 1 ou 2, caractérisé en ce qu'on utilise au moins 0,9 mol d'acide carboxylique par mol de m-phénylène-diamine.

4. Procédé selon la revendication 1, caractérisé en ce qu'on utilise, pour la diazotation, le nitrite de sodium ou un nitrite d'alkyle.

5. Procédé selon la revendication 1 ou 4, caractérisé en ce qu'on utilise, en tant que nitrite d'alkyle, le dinitrite de néopentyl-glycol.

6. Utilisation des colorants préparés suivant l'invention pour la coloration de papier, de cuir ou de fibres modifiées anioniquement.